(19) Europäisches Patentamt
European Patent Office
Office européen des brevets

(11) Publication number: 0 146 238 A1

(12) **EUROPEAN PATENT APPLICATION**

(21) Application number: 84307255.4

(22) Date of filing: 22.10.84

(51) Int. Cl.⁴: A 01 N 57/20
// (A01N57/20, 43:40, 39:02)

(30) Priority: 27.10.83 US 545991

(43) Date of publication of application: 26.06.85 Bulletin 85/26

(84) Designated Contracting States: AT BE CH DE FR GB IT LI NL SE

(71) Applicant: STAUFFER CHEMICAL COMPANY, Westport Connecticut 06881 (US)

(72) Inventor: Kezerian, Charles, 26 Descanso Drive, Orinda California 94563 (US)
Inventor: Ahle, James Leroy, 1144 Fairford Way, San Jose California 95129 (US)

(74) Representative: Smith, Sydney et al, Elkington and Fife High Holborn House 52/54 High Holborn, London WC1V 6SH (GB)

(54) **Synergistic herbicidal composition.**

(57) Synergistic herbicidal activity is demonstrated by composition comprising the following two components:

(a) an herbicidally effective amount of N-phosphonomethylglycine and agriculturally acceptable salts thereof; and

(b) an an herbicidally effective amount of an aryloxyphenoxy pentanoic acid ester of the formula

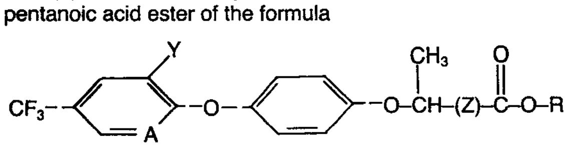

wherein A is CH or nitrogen, Y is hydrogen or chlorine, Z is selected from a member of the group consisting of

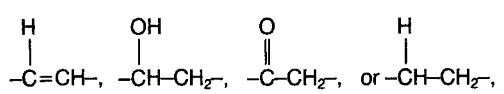

and R is hydrogen or a straight or branched chain lower alkyl group having from 1 to 4 carbon atoms.

EP 0 146 238 A1

# SYNERGISTIC HERBICIDAL COMPOSITIONS

## Background of the Invention

The protection of crops from weeds and other vegetation which inhibit crop growth by consuming valuable acreage or soil nutrients is a constantly recurring problem in agriculture. To help combat this problem, researchers in the field of synthetic chemistry have produced an extensive variety of chemicals and chemical formulations effective in the control of such unwanted growth. Chemical herbicides of many types have been disclosed in the literature and a large number are in commercial use.

In many cases, active herbicides have been shown to be more effective in combination than when applied individually. The result is often termed "synergism," since the combination demonstrates a potency or activity level exceeding that which might be expected from a mere addition of the individual potencies of the components.

The present invention resides in the discovery that two classes of compounds already known individually for their herbicidal potency display this synergistic effect when applied in combination.

## Prior Art

The two classes of herbicides forming the combination which is the subject of the present invention are both known in the art of chemical herbicides for their activity independent of each other.

One herbicide compound, which has been found to be biodegradable, yet which is effective as a herbicide and plant growth regulator when employed at lower rates, is N-phosphonomethylglycine and various salts thereof. The N-phosphonomethylglycine and agriculturally effective salts have been approved for use by the U.S. Government, and, as a consequence, this herbicide has become commercially successful.

The N-phosphonomethylglycine and certain salts are effective and approved post-emergence herbicides in the field. The present commercial

compound is the isopropylamine salt of N-phosphonomethylglycine and derivatives thereof.

The N-phosphonomethylglycines, and certain soluble salts thereof, can be made in a number of different ways. One such method, as described in U.S. Patent 3,160,632 (Toy et al., December 8, 1964) is to react N-phosphinomethylglycine (glycinemethylenephosphinic acid) with mercuric chloride in a water solvent at reflux temperature, and subsequently separating the reaction products. Other methods include the phosphonomethylation of glycine and the reaction of ethyl glycinate with formaldehyde and diethylphosphite. The latter method is described in U.S. Patent No. 3,799,758 (Franz, March 26, 1974). In addition, there is a whole series of patents, relating to N-phosphonomethylglycines, their salts, and derivatives thereof, described as being useful herbicides and plant growth regulators. Such additional patents relating to the N-phosphonomethylglycines, methods of application, methods of preparation, salts, and derivatives, include U.S. Patent 3,868,407, U.S. Patent 4,197,254, and U.S. Patent 4,199,354, among others.

U.S. Patents 4,315,765 and 4,376,644 disclose sulfonium salts of N-phosphonomethylglycine as effective herbicides. These are especially preferred for use in this invention.

The second class of compounds used in conjunction with the phosphonomethylglycines to form the synergistic herbicidal compositions of the invention are known as aryloxyphenoxy pentanoic acid esters.

Representative ones of these compounds are disclosed in U.S. Patent Application Serial Nos. 299, 413 and 379,609, as well as U.S. Patents 4,163,661, 4,134,751, and German Patent 2,812,571, among others. The aryloxyphenoxy pentanoic acid esters are known to have particularly good herbicidal activity against grasses when used in a post-emergent treatment method.

## Description of the Invention

It has now been discovered that synergism in the control of undesired vegetation is exhibited by herbicidal compositions comprising the following two components:

(a) N-phosphonomethylglycine and agriculturally acceptable salts thereof; and

(b) an aryloxyphenoxy pentanoic acid ester of the formula

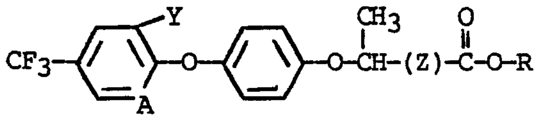

wherein A is CH or nitrogen, Y is hydrogen or chlorine, Z is selected from a member of the group consisting of

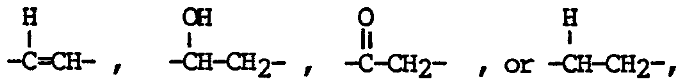 , or , and R is hydrogen or a straight or branched chain lower alkyl group having from 1 to 4 carbon atoms.

The preferred N-phosphonomethylglcyine compounds for use in the practice of the invention include the isopropyl salt of N-phosphonomethylglcyine, and the trialkylsulfonium salts of N-phosphonomethylglycine as disclosed in U.S. Patent 4,315,765, assigned to the Stauffer Chemical Company.

The preferred aryloxyphenoxy pentanoic acid esters for use in the practice of the invention include those compounds described and claimed in U.S. Patent Application Serial Nos. 379,609, filed May 19, 1982, and 486,730 and 486,750, both filed April 20, 1983.

The most preferred esters are 2-[-4-(5-trifluoromethyl-3-chloro-2-pyridyloxy)-phenoxy]-pentanoic acid, ethyl ester, 2-[-4-(5-trifluoromethyl-3-chloro-2-pyridyloxy)-phenoxy]-pentanoic acid, methyl ester, 2-[4-(5-trifluoromethyl-2-phenoxy)-phenoxy]-pentanoic acid, ethyl ester, and 2-[4-(5-trifluoromethyl-2-phenoxy)-phenoxy]-pentanoic acid, butyl ester.

A "herbicide", as the term is used herein, is a compound which controls or modifies the growth of plants. The term "herbicidally effective amount" is used to indicate any quantity of such a compound which is capable of producing such an effect. Controlling or modifying effects include all deviations from natural development, for example, killing, retardation, defoliation, desiccation, regulation, stunting, tillering,

leaf burn, dwarfing and the like. The term "plants" is used to include germinating seeds, emerging seedlings, and established vegetation, including roots and above-ground portions.

The term "synergism" is employed in its traditional sense and describes the result obtained when the herbicidal effect of a composition containing two or more active herbicidal compounds is greater than the sum of the herbicidal effects of the compounds when used alone.

In the compositions of this invention, the (N-phosphonomethylglycine):(aryloxyphenoxy pentanoic acid ester) weight ratio lies within the following approximate limits, in order of increasing preference: 0.01:1 to 50:1; 0.05:1 to 32:1; 0.1:1 to 20:1; and 1:1 to 10:1.

Application rates will depend upon the weeds to be controlled and the degree of control desired. In general, the compositions of this invention are most efficiently employed at a rate of 0.01 to 50 pounds per acre (0.011 to 56 kilograms per hectare) of the active ingredients, preferably 0.1 to 25 pounds per acre (0.11 to 28 kilograms per hectare).

Herbicidal compositions illustrative of those embodied in the instant application were prepared and evaluated for synergistic herbicidal effect. The results are shown in the following examples.

EXAMPLE 1

Herbicidal Activity Tests

This example offers herbicidal activity test data to show the synergistic effectiveness of the compounds of the invention. The effect is observed by comparing the extent of weed control in test flats treated with the herbicide combinations of the invention against that occurring in similar control flats of the compounds individually. The soil used in these tests was a sandy loam soil from the Livermore, Ca. area.

Also added to the soil was 17-17-17 fertilizer ($N$-$P_2O_5$-$K_2O$ on a weight basis), amounting to 50 ppm by weight with respect to the soil, and 100 ppm Captan, a soil fungicide.

The treated soil was then placed in plastic tubs which were 6 inches in diameter and 5 inches deep. The soil was leveled. The test weeds were as follows:

| COMMON NAME | SCIENTIFIC NAME |
|---|---|
| A. johnsongrass | *Sorghum halepense* |
| B. bermudagrass | *Cynodon dactylon* |
| C. purple nutsedge | *Cyperus rotundus* |

Sufficient rhizomes, stolons or tubers were planted to produce several plants per tub. The tubs were then placed in a greenhouse maintained at 70 to 80°F (21 to 27°C) and the plants were watered daily by a sprinkler.

A stock solution of the technical herbicides is prepared by weighing the desired amount of the technical and dissolving in 20 g of acetone containing 1% Tween 20® (polyoxyethylene sorbitan monolaurate), and then adding 20 g of water to the resulting solution. Stock solutions of the formulated herbicides are prepared by weighing the desired amount of each herbicide and then adding enough water until 40 g of solution is obtained. Various rates, either alone or in combinations, were achieved by measuring and dispensing appropriate amounts of the stock solution in 2 ounce bottles and adding enough water until 40 ml of the spray solution is obtained. Chemical application is made at 25 gallon/acre, five to six weeks after planting.

Approximately 28 days after treatment, the degree of weed control was estimated and recorded as percentage control compared to the growth of the same species in an untreated check flat of the same age. The rating scale ranges from 0 to 100%, where 0 equals no effect with plant growth equal to the untreated control, and 100 equals complete kill.

The results of these tests are listed in Table I below. Synergism is determined on the basis of Limpel's formula (Limpel et al., 1962, "Weed Control by Dimethylchloroterephthalate Alone and in Certain Combinations," Proc. NEWCC, Vol. 16, pp. 48-53):

$$E = X + Y - \frac{XY}{100}$$

where X = observed percent injury when one of the herbicides is used alone, and

Y = observed percent injury when the other herbicide is used alone.

A single asterisk (*) is used to indicate the tests where the results show synergism, i.e., where the observed result exceeds the expected result.

TABLE I

HERBICIDE TEST RESULTS

| Compound Number* | Application Rate (lb/A) | Johnsongrass | Bermudagrass | Rate Rate (lb/A) | Purple Nutsedge |
|---|---|---|---|---|---|
| 1 | 1/8 + 1/8 | 80 | 75 | 3/8 + 1/8 | 35 |
| 2 | 3/16 + 1/16 | 75 | 65 | 1/2 + 1/2 | 50 |
| 1 | 1/8 + 1/8 | 93 | 98 | 3/8 + 1/8 | 50 |
| 3 | 3/16 + 1/16 | 90 | 93 | 1/2 + 1/2 | 70 |
| 1 | 1/8 + 1/8 | 100 | 95 | 3/8 + 1/8 | 55 |
| 4 | 3/16 + 1/16 | 95 | 90 | 1/2 + 1/2 | 85 |
| 1 | 1/8 + 1/8 | 80 | 99 | 3/8 + 1/8 | 30 |
| 5 | 3/16 + 1/16 | 80 | 75 | 1/2 + 1/2 | 80 |
| 1 | 1/8 | 15 | 0 | 3/8 | 35 |
| | 3/16 | 75 | 10 | 1/2 | 65 |
| | 1/4 | 100 | 40 | 1 | 95 |
| | 1/2 | 100 | 90 | | |
| 2 | 1/4 | 93 | 100 | 1 | 0 |
| 3 | 1/4 | 95 | 100 | 1 | 0 |
| 4 | 1/4 | 100 | 100 | 1 | 0 |
| 5 | 1/4 | 95 | 98 | 1 | 0 |

1. sulfonium salt of N-phosphonomethylglycine.
2. 2-[4-(5-trifluoromethyl-2-phenoxy)-phenoxy]-pentanoic acid, ethyl ester
3. 2-[4-(5-trifluoromethyl-3-chloro-2-pyridyloxy)-phenoxy]-pentanoic acid, ethyl ester
4. 2-[4-(5-trifluoromethyl-2-pyridyloxy)-phenoxy]-pentanoic acid, methyl ester
5. 2-[4-(5-trifluoromethyl-2-phenoxy)-pehnoxy]-pentanoic acid, ethyl ester

All ratings are an average of two replications.

It is seen from the Table above that synergistic activity exists between N-phosphonomethylglycine type herbicides and the aryloxyphenoxy pentanoic acid esters as described herein.

The compositions of the present invention are useful as herbicides in controlling the growth of undesirable vegetation by preemergence or post-emergence application to the locus where control is desired, including pre-plant and post-plant soil incorporation as well as surface application. The compositions are generally embodied in formulations suitable for convenient application. In general, such formulations will contain inert or occasionally active ingredients or diluent carriers in addition to the active compound. Examples of such ingredients or carriers are water, organic solvents, dust carriers, granular carriers, surface active agents, oil and water, water in oil emulsions, wetting agents, dispersing agents, and emulsifying agents. The herbicidal formulations generally take the form of dusts, wettable powders, granules, solutions, or emulsifiable concentrates.

Dusts are free-flowing powder compositions containing the herbicidal compound impregnated on a particulate carrier. The particle size of the carrier is usually in the range of from about 30 to 50 microns. Examples of suitable carriers are talc, bentonite, diatomaceous earth, and pyrophyllite. Anticaking and antistatic agents can be added, if desired. The composition generally contains up to 50% of active ingredient.

Wettable powders are finely divided compositions comprising a particulate carrier impregnated with the herbicidal compound and additionally containing one or more surface active agents. The surface active agent promotes rapid dispersion of the powder in aqueous medium to form stable, sprayable suspensions. A wide variety of surface active agents can be used, for example, long-chain fatty alcohols and alkali metal salts of the sulfated fatty alcohols; salts of sulfonic acid; esters of long-chain fatty acids; and polyhydric alcohols, in which the alcohol groups are free, omega-substituted polyethylene glycols of relatively long chain length. A list of surface active agents suitable for use in agriculture formulations can be found in Pesticide Formulations by Wade Van Valkenburg, Marcel Dekker, Inc., N.Y., 1972 at pages 79-84.

Granules comprise the herbicidal composition impregnated on a particulate inert carrier having a particle size of about 1 to about 2 millimeters in diameter. The granules can be made by spraying a solution of the active ingredient in a volatile solvent onto the granular carrier. Suitable carriers in preparation of granules include clay, vermiculite, sawdust, granular carbon, and the like.

The herbicidal compositions can also be applied to the soil in the form of a solution in a suitable solvent. Solvents frequently used in herbicidal formulations include kerosene, fuel oil, xylene, petroleum fractions with boiling ranges above xylene, and aromatic petroleum fractions rich in methylated naphthalenes.

Emulsifiable concentrates consist of an oil solution of the herbicide along with an emulsifying agent. Prior to use the concentrate is diluted with water to form a suspended emulsion of soil droplets. The emulsifiers used are usually a mixture of anionic and nonionic surfactants. Other additives such as spreading agents and stickers can be included in the emulsifiable concentrate.

The formulations described above, employing phytotoxic or herbicidally effective amounts of the compositions described herein, are applied to the loci where control is desired in any conventional manner. The loci referred to above include soil, seeds, seedlings, and the actual plants, as well as flooded fields. Dusts and liquid compositions can be applied by the use of powder dusters, boom and hand sprayers and spray dusters. The compositions can also be applied from airplanes as dusts or sprays because they are effective in very low dosages. In order to modify or control growth of germinating seeds or emerging seedlings, as a typical example, the dust and liquid compositions are applied to the soil according to conventional methods and are distributed in the soil to a depth of at least one-half inch below the soil surface. It is not necessary that the phytotoxic compositions be admixed with the soil particles. Instead, these compositions can be applied merely by spraying or sprinkling the surface of the soil. The phytotoxic compositions of this invention can also be applied by addition to irrigation water supplied to the field to be treated. This method of application permits the penetration of the

compositions into the soil as the water is absorbed therein. Dust compositions, granular compositions or liquid formulations applied to the surface of the soil can be distributed below the surface of the soil by conventional means such as discing, dragging or mixing operations.

The amount of a composition of the present invention which constitutes a phytotoxic or herbicidally effective amount depends upon the nature of the seeds or plants to be controlled. The rate of application of active ingredient varies from about 0.01 to about 50 pounds per acre, preferably about 0.1 to about 25 pounds per acre with the actual amount used depending on the overall cost and the desired result. It will be readily apparent to one skilled in the art that compositions exhibiting lower herbicidal activity will require a higher dosage rate for the same degree of control than more active compounds.

CLAIMS:

1. A synergistic herbicidal composition comprising a mixture

(a) an herbicidally effective amount of N-phosphonomethylglycine or an agriculturally acceptable salt thereof; and

(b) an herbicidally effective amount of an aryloxyphenoxy pentanoic acid ester of the formula:

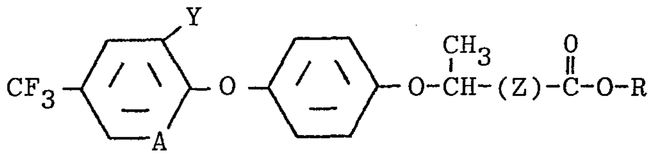

wherein A is CH or nitrogen, Y is hydrogen or chlorine, Z is selected from a member of the group consisting of 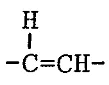 , 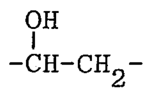 , 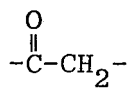 , or 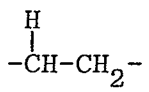 , and R is hydrogen or a straight or branched chain lower alkyl group having from 1 to 4 carbon atoms.

2. A composition as claimed in claim 1 characterised in that the weight ratio of N-phosphonomethylglycine or salt thereof : aryloxyphenoxy pentanoic acid ester is from 0.01:1 to 50:1, preferably 0.05:1 to 32:1, and in particular 0.1:1 to 20:1.

3. A composition as claimed in claim 2 characterised in that said weight ratio is from 1:1 to 10:1.

4. A composition as claimed in claim 3 characterised in that said weight ratio is from 8:1 to 5:1, in particular 4:1 to 5:1.

5. A composition as claimed in any of claims 1 to 4 characterised in that the agriculturally acceptable salt of N-phosphonomethylglycine is the sulfonium salt and the aryloxyphenoxy pentanoic acid ester is 2-[4-(5-trifluoromethyl-2-pyridyloxy)-phenoxy]-pentanoic acid, ethyl ester.

6. A composition as claimed in claim 5 characterised in that the weight ratio of the first to the second component is from 4:1 to 8:1.

7. A composition as claimed in any of claims 1 to 4 characterised in that the agriculturally acceptable salt of N-phosphonomethylglycine is the sulfonium salt and the aryloxyphenoxy pentanoic acid ester is 2-[4-(5-trifluoromethyl-2-pyridyloxy)-phenoxy]-pentanoic acid, methyl ester.

8. A composition as claimed in claim 7 characterised in that the weight ratio of the first to the second component is from 2:1 to 16:1, in particular from 8:1 to 4:1.

9. A method of controlling undesirable vegetation which comprises applying to the locus where control is desired an herbicidally effective amount of a synergistic herbicidal composition as claimed in any of claims 1 to 8.

European Patent Office

**EUROPEAN SEARCH REPORT**

0146238

Application number

EP 84 30 7255

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| A | EP-A-0 053 871 (STAUFFER)<br>* Claims * | 1,5,7 | A 01 N 57/20<br>//(A 01 N 57/20<br>A 01 N 43/40<br>A 01 N 39/02) |
| D | & US-A-4 315 765 (G.B.LARGE)<br>--- | | |
| D,A | US-A-3 799 758 (J.E.FRANZ)<br>* Column 13, line 71 - column 14, line 54; claims *<br>--- | 1,5,7,9 | |
| A | WO-A-81 01 787 (NITROKÉMIA IPARTELEPEK)<br>* Page 2, lines 1-34, claims *<br>--- | 1-9 | |
| | | | **TECHNICAL FIELDS SEARCHED (Int. Cl.4)** |
| D,X | US-A-4 163 661 (K.JIKIHARA et al.)<br>* Column 11, lines 22,23; column 13, lines 1-8; claims * | 1,9 | A 01 N |
| D,A | ----- | 2-8 | |

The present search report has been drawn up for all claims

| Place of search | Date of completion of the search | Examiner |
|---|---|---|
| THE HAGUE | 21-02-1985 | A.S.FLETCHER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82